# EUROPÄISCHE PATENTSCHRIFT

(11) **EP 1 923 976 B1**
(45) Veröffentlichungstag und Bekanntmachung des Hinweises auf die Patenterteilung: **17.06.2009**
(21) Anmeldenummer: 07021273.3
(22) Anmeldetag: 31.10.2007
(51) Int. Cl.: H02G 13/00, F16B 2/06

(54) **Klemmer zur Befestigung an einem ersten Gegenstand**
Clamp for attaching to a first object
Pince destinée à la fixation sur un premier objet

(30) Priorität: 18.11.2006 DE 202006017631 U
(43) Veröffentlichungstag der Anmeldung: 21.05.2008
(73) Patentinhaber: OBO Bettermann GmbH & Co. KG, 58710 Menden (DE)
(72) Erfinder: Schmidt, Olaf, 59494 Soest (DE); Trinkwald, Jürgen, 58708 Menden (DE)
(74) Vertreter: Köchling, Conrad-Joachim

(56) Entgegenhaltungen:
- EP-A- 0 834 959
- CH-A- 302 283
- DE-A1- 3 606 329
- DE-A1- 3 835 245

## Beschreibung

Die Erfindung betrifft eine Klemme zur Befestigung an einem ersten Gegenstand, insbesondere einer Dachrinne, und zur Fixierung mindestens eines zweiten Gegenstandes, insbesondere eines formstabilen Drahtes als Bestandteil einer Blitzschutzinstallation, bestehend aus einem Klemmenunterteil, einem Klemmenoberteil, einem mit dem Klemmenoberteil zusammenwirkenden Klemmbügel und einer Schraube, mittels derer die drei Teile zusammengehalten sind.

Eine derartige Klemme ist beispielsweise aus der DE 36 06 329 A1 bekannt. Solche Klemmen aus Metall werden als Bestandteil von Blitzschutzanlagen benutzt. Hierzu wird die Klemme mit dem Klemmenunterteil und dem Klemmenoberteil an der Wulst einer Dachrinne befestigt. Des Weiteren werden mittels des Klemmbügels zwischen dem Klemmbügel und dem Klemmenoberteil entsprechende Rundleiter eingeklemmt, die Bestandteil einer Blitzschutzanlage sind. Zur Fixierung ist eine einzige Schraube vorgesehen, mittels derer sowohl das Klemmenunterteil und das Klemmenoberteil am Rand der Dachrinne fixiert werden und auch der Klemmbügel unter Einspannung der entsprechenden Rundleiter gegen das Klemmenoberteil angezogen wird.

Eine solche Ausbildung ist zwar insofern vorteilhaft, als nur eine einzige Schraube zur Fixierung aller Elemente zu betätigen ist. Nachteilig ist dabei aber, dass beim Fixieren der Elemente deswegen Schwierigkeiten auftreten, weil zum Einbringen der entsprechenden Rundleiter zwischen Klemmbügel und Klemmenoberteil die entsprechende Schraube gelockert oder gelöst werden muss, so dass damit auch die Klemmverbindung zwischen Klemmenunterteil, Dachrinnenwulst und Klemmenoberteil gelockert oder gelöst wird. In der Praxis führt dies zu Handhabungsschwierigkeiten für den Montierenden.

Ausgehend von diesem Stand der Technik liegt der Erfindung die Aufgabe zugrunde, eine Klemme gattungsgemäßer Art zu schaffen, bei der einerseits der Vorteil beibehalten wird, dass die Klemme nur mit einer einzigen Schraube zu betätigen ist, andererseits aber die Montagefreundlichkeit verbessert wird.

Zur Lösung dieser Aufgabe schlägt die Erfindung vor, dass zwischen dem Klemmenoberteil und dem Klemmbügel eine Feder eingespannt ist, gegen deren Vorspannkraft der Klemmbügel gegen das Klemmenoberteil anziehbar ist.

Bei dieser Lösung ist nach wie vor nur eine einzige Schraube erforderlich, mittels derer einerseits der Dachrinnenrand zwischen Klemmenunterteil und Klemmenoberteil eingeklemmt werden kann und andererseits die entsprechenden Rundleiter zwischen Klemmenoberteil und Klemmbügel fixiert werden können.

Durch die Anordnung der zusätzlichen Feder wird erreicht, dass beim Lockern der Schraube die Klemmbefestigung zwischen Klemmenoberteil, Klemmenunterteil und Dachrinnenrand aufrechterhalten bleibt, weil die Teile durch die zwischen dem Klemmenoberteil und dem Klemmbügel befindliche Feder unter Vorspannung gehalten werden, selbst wenn die Schraube gelockert ist. Bei gelockerter Schraube kann aber dann die Einführung der entsprechenden Rundleiter in dem Bereich zwischen dem Klemmbügel und dem Klemmenoberteil erfolgen. Nachdem diese positioniert sind, kann die Schraube vollständig angezogen werden, so dass dann eine starre Verbindung zwischen allen Bestandteilen hergestellt ist, während die Federung durch das Anziehen der Schraube aufgehoben ist.

Besonders bevorzugt ist vorgesehen, dass die Feder als Schraubendruckfeder ausgebildet ist, die sich mit ihren Enden an den einander gegenüberliegenden Flächen des Klemmbügels und des Klemmenoberteils abstützt.

Im Prinzip könnte auch eine Schenkelfeder zwischen dem Klemmenoberteil und dem Klemmenbügel angeordnet sein, jedoch ist die Anordnung einer Schraubendruckfeder hinsichtlich der Positionierung und der notwendigen Kraftausübung bezüglich der Montage bevorzugt.

Um die Montage weiterhin zu vereinfachen und den Zusammenhalt der Teile auch bei gelockerter Schraube sicherzustellen, ist zudem vorgesehen, dass die Feder als Schraubendruckfeder ausgebildet und axial vom Schaft der Schraube durchgriffen ist.

In an sich bekannter Weise kann vorgesehen sein, dass die Schraube einen Kopf mit einem Werkzeugansatz aufweist und mit ihrem Gewindeschaft in eine Gewindeausbildung des Klemmenunterteils eingeschraubt ist, wobei der Kopf sich oberseitig des Klemmbügels abstützt.

Eine solche Ausbildung ist an sich aus der gattungsbildenden DE 36 06 329 C 2 bekannt.

Bevorzugt ist vorgesehen, dass die Schraube als Schlossschraube ausgebildet ist, deren Kopf sich an der Unterseite des Klemmenunterteils abstützt, deren dem Kopf benachbarter Vierkant eine Rechtecklochung des Klemmenunterteils durchgreift und auf deren Gewindeschaft eine Schraubenmutter aufgeschraubt ist, die sich an der Oberseite des Klemmbügels abstützt.

Hierbei ist besonders bevorzugt vorgesehen, dass die Rechtecklochung des Klemmenunterteils in Querrichtung zum Längsverlauf des Klemmenunterteils gesehen, dem Vierkant eng angepasst ist und in Längsrichtung größer als die Abmessung des Vierkantes, vorzugsweise etwa doppelt so groß bemessen ist.

Durch die Ausbildung wird erreicht, dass das Öffnen der Klemmenbestandteile (Klemmenoberteil und Klemmenunterteil) erleichtert wird, weil sich der Vierkant der Schlossschraube bei der Spreizung von Klemmenoberteil und Klemmenunterteil in dem Langloch bewegen kann, so dass ein zwängungsfreies Öffnen der Klemme ermöglicht ist, um diese bei gelockerter Schraube auf den Randwulst einer Dachrinne aufzusetzen.

Bevorzugt ist zudem, dass das Klemmenoberteil, das Klemmenunterteil und der Klemmbügel aus Metallblech, insbesondere Stahl-, Aluminium- oder Kupferblech oder dergleichen Material, gestanzte und geformte Formstücke sind.

Hierdurch wird die Fertigung der Einzelteile kostengünstig ermöglicht.

Um eine ausreichende Steifigkeit der Klemmenbestandteile zu erreichen, ist vorgesehen, dass das Klemmenoberteil und das Klemmenunterteil über ihren Längsverlauf je zwei zueinander parallel gerichtete Versteifungssicken aufweisen, wobei der Abstand zwischen den Sickenpaaren mindestens gering größer ist als der Kopfdurchmesser des Kopfes der Schraube beziehungsweise als dem von den durch den Klemmbügel gehaltenen Drähten überdeckten Flächenbereich entspricht.

Dabei ist der Abstand der Sickenpaare voneinander so gewählt, dass einerseits der Schraubenkopf bei angezogener Verbindung zwischen den Sicken des Klemmenunterteils liegt und andererseits die in den Klemmbügel eingelegten Rundleiter im angezogenen Zustand der Klemme in dem Bereich zwischen den Sicken des Klemmenoberteils liegen.

Weiterhin ist bevorzugt, dass der Klemmbügel aus einer flachen Blechplatte rechteckiger Form besteht, von deren Längsrandkanten Haltelaschen für Drähte oder Drahtstäbe in Richtung zum Klemmenoberteil hin abgebogen geformt sind und von deren Querrandkanten Abstandhaltelaschen für parallel verlegte Drähte oder Drahtstäbe zum Klemmenoberteil hin abgebogen geformt sind.

Die von den Längsrandkanten abgebogenen oder abgewinkelten Haltelaschen dienen als Halterung für die entsprechenden Leiterdrähte oder dergleichen, während die an den Querrandkanten abgebogenen oder abgekanteten Haltelaschen als Abstandhalter zwischen zwei in die Klemme eingelegten Leiterdrähten oder Rundleitern dienen.

Um die gewünschte Funktion der Klemme zu gewährleisten, so dass diese also bei gelockerter Schraube montierbar ist, ist vorgesehen, dass die Länge der Schraube so groß bemessen ist, dass bei in eine Vormontagelage verstellter gelockerter Schraube das Klemmenoberteil relativ zum Klemmenunterteil in eine Montagelage entgegen der Kraft der Feder verstellbar ist.

Um sicherzustellen, dass beim Lockern der Schraube die Klemmverbindung zwischen Klemmenoberteil, Dachrinnenwulst und Klemmenunterteil aufrechterhalten wird, ist vorgesehen, dass die Kraft der Feder derart bemessen ist, dass bei in einer Vormontagelage befindlicher Schraube eine Klemmung des ersten Gegenstandes zwischen Klemmenoberteil und Klemmenunterteil bewirkt ist.

Ein Ausführungsbeispiel der Erfindung ist in der Zeichnung dargestellt und im Folgenden näher beschrieben. Es zeigt:
- Figur 1: eine erfindungsgemäße Klemme in einer ersten Funktionslage;
- Figur 2: desgleichen in einer zweiten Funktionslage;

- Figur 3: die Klemme gemäß Figur 2 in einer anderen Ansicht;
- Figur 4: die Klemme gemäß Figur 2 in Seitenansicht;
- Figur 5: desgleichen in Vorderansicht;
- Figur 6: desgleichen in Untersicht;
- Figur 7: desgleichen in Draufsicht.

In der Zeichnung ist eine Klemme zur Befestigung an einem ersten Gegenstand, beispielsweise dem Randwulst einer Dachrinne und zur Fixierung mindestens eines zweiten Gegenstandes, beispielsweise eines Rundleiters oder zweier Rundleiter als Bestandteil einer Blitzschutzinstallation gezeigt. Die Klemme besteht aus einem Klemmenunterteil 1, einem Klemmenoberteil 2, einem mit dem Klemmenoberteil 2 zusammenwirkenden Klemmbügel 3 und einer Schraube 4.

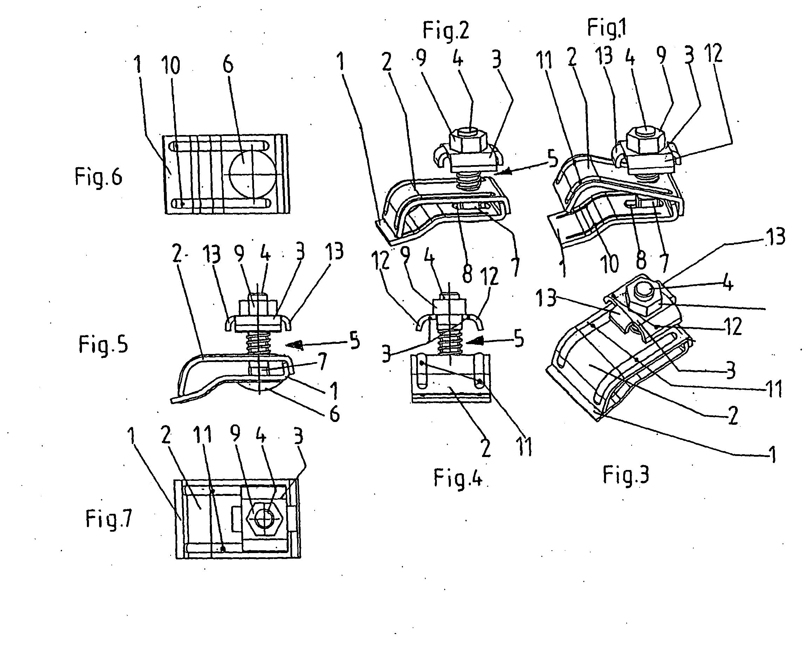

Mittels der Schraube 4 sind die drei Bestandteile 1 bis 3 zusammengehalten. Um bei gelockerter Schraubverbindung einerseits die Klemmung eines Gegenstandes zwischen dem Klemmenunterteil 1 und dem Klemmenoberteil 2 beizubehalten und andererseits zwischen dem Klemmenoberteil 2 und dem Klemmbügel 3 entsprechende Rundleiter einfügen und befestigen zu können, ist zwischen dem Klemmenoberteil 2 und dem Klemmbügel 3 eine Feder 5 eingespannt. Diese Feder 5 drückt einerseits das Klemmenoberteil 2 an das Klemmenunterteil 1 und hält andererseits den Klemmbügel 3 auf Abstand von dem Klemmenoberteil 2, wie dies beispielsweise aus den Figuren 2 bis 5 ersichtlich ist. Es ist damit möglich, die Klemme beispielsweise auf den Randwulst einer Dachrinne aufzusetzen und daran zu befestigen, indem das Klemmenoberteil 2 durch manuelle Einwirkung gegenüber dem Klemmenunterteil 1 in eine Lage verstellt wird, wie sie in Figur 1 gezeigt ist. Werden die Klemmenteile losgelassen, so wird der Rand einer Dachrinne zwischen dem abgewinkelten Ende des Klemmenoberteils und dem entsprechend etwas verkröpften Bereich des Klemmenunterteils 1 eingespannt unter Federkraft gehalten. Nachträglich kann der Montierende dann beispielsweise Rundleiter oberhalb des Klemmenoberteils 2 positionieren und durch Anziehen der Schraube den Klemmbügel 3 gegen die Rundleiter anspannen und diese gegen die Oberseite des Klemmenoberteils 2 andrücken und fixieren. In der Endstellung ist die Federwirkung aufgehoben, weil dann der Klemmbügel 3 sich unmittelbar an den entsprechenden Rundleitern abstützt und diese wiederum fest gegen die Oberseite des Klemmenoberteils 2 angedrückt sind, während das Klemmenoberteil 2 fest gegen das Klemmenunterteil 1 angezogen ist. Die Federungswirkung ist also bei angezogener Schraubverbindung aufgehoben.

Die Feder 5 ist als Schraubendruckfeder ausgebildet, wobei sich deren Enden an den einander gegenüberliegenden Flächen des Klemmbügels 3 und des Klemmenoberteils 2 abstützt. Insbesondere ist die als Schraubendruckfeder ausgebildete Feder 5 axial vom Schaft der Schraube 4 durchgriffen und somit verliersicher gehalten. Für den Durchgriff der Schraube 4 weist das Klemmenoberteil 2 eine dem Gewindeschaft der Schraube 4 angepasste Lochung auf. Die Lochung ist so bemessen, dass möglichst die Feder 5 nicht in die Lochung eintauchen kann. Ebenso weist der Klemmbügel 3 eine Lochung für den Durchgriff des Gewindeschafts der Schraube 4 auf, die wiederum so bemessen ist, dass auch hier die Feder 5 nicht eintauchen kann.

Im Ausführungsbeispiel ist die Schraube 4 als Schlossschraube ausgebildet, deren Kopf 6 sich an der Unterseite des Klemmenunterteils 1 abstützt, deren dem Kopf 6 benachbarter Vierkant 7 eine Rechtecklochung 8 des Klemmenunterteils 1 durchgreift und auf deren Gewindeschaft eine Schraubenmutter 9 aufgeschraubt ist, die sich an der Oberseite des Klemmbügels 3 abstützt. Die Rechtecklochung 8 des Klemmenunterteils 1 ist in Querrichtung zum Längsverlauf des Klemmenunterteils 1 gesehen, dem Vierkant 7 eng angepasst, während sie in Längsrichtung erheblich größer als die Abmessung des Vierkantes 7 ist, vorzugsweise etwa doppelt so groß. Hierdurch wird das Öffnen der Klemme in die Position gemäß Figur 1 ermöglicht, in dem sich der Vierkant 7 der Schlossschraube bei der Spreizung von Klemmenoberteil 2 und Klemmenunterteil 1 Analog Figur 1 bewegen kann.

Im Ausführungsbeispiel sind das Klemmenunterteil 1, das Klemmenoberteil 2 und der Klemmbügel 3 aus Stahlblech gestanzte und geformte Formteile. Sowohl das Klemmenoberteil 2 als auch das Klemmenunterteil 1 weist jeweils über seinen Längsverlauf zwei zueinander parallel gerichtete Versteifungssicken 10 beziehungsweise 11 auf. Der Abstand zwischen den Sickenpaaren 10 beziehungsweise 11 ist jeweils gering größer als einerseits der Kopfdurchmesser des Kopfes 6 der Schraube 4 und andererseits als dem von den durch den Klemmbügel 3 gehaltenen Rundleiterdrähten oder dergleichen überdeckten Flächenbereich entspricht. In der Montagesollposition liegt also der Schraubenkopf 6 zwischen den Sicken 10, wie in Figur 6 veranschaulicht. Bei Montage der Rundleiter zwischen Klemmbügel 3 und Klemmenoberteil liegen diese Rundleiter zwischen den Sicken 11.

Der Klemmbügel 3 ist aus einer flachen Blechplatte rechteckiger Form gebildet, von deren Längsrandkanten Haltelaschen 12 für Leiterdrähte oder Drahtstäbe in Richtung zum Klemmenoberteil 2 hin abgebogen geformt sind, während von deren Querrandkanten Abstandshaltelaschen 13 für parallel zueinander verlegte Drähte oder Drahtstäbe zum Klemmenoberteil 2 hin abgebogen geformt sind.

Die Länge der Schraube 4 ist so groß bemessen, dass bei in einer Vormontagelage gemäß Figur 1 und 2 verstellter Schraube 4 das Klemmenoberteil 2 relativ zum Klemmenunterteil 1 in eine Montagelage gemäß Figur 1 entgegen der Kraft der Feder 5 verstellbar ist, wobei der Einführschlitz zwischen Klemmenunterteil und Klemmenoberteil 2 so groß ist, dass der Wulst der Dachrinne übergriffen werden kann.

Die Kraft der Feder 5 ist vorzugsweise so bemessen, dass bei in einer Vormontagelage befindlicher Schraube gemäß Figur 1 oder Figur 2 eine Klemmung des ersten Gegenstandes zwischen dem Klemmenoberteil 2 und dem Klemmenunterteil 1 bewirkt ist, andererseits aber ein ausreichender Abstandsspalt zwischen dem Klemmbügel 3 und der Oberseite des Klemmenoberteils 2 bestehen bleibt, so dass dort entsprechende Rundleiter eingesetzt werden können, bevor die Schraube 4 angezogen wird beziehungsweise die Mutter 9 auf der Schraube 4 angezogen wird.

Die Erfindung ist nicht auf das Ausführungsbeispiel beschränkt, sondern im Rahmen der Offenbarung vielfach variabel.

## Patentansprüche

1. Klemme zur Befestigung an einem ersten Gegenstand, insbesondere einer Dachrinne, und zur Fixierung mindestens eines zweiten Gegenstandes, insbesondere eines formstabilen Drahtes als Bestandteil einer Blitzschutzinstallation, bestehend aus einem Klemmenunterteil (1), einem Klemmenoberteil (2), einem mit dem Klemmenoberteil (2) zusammenwirkenden Klemmbügel (3) und einer Schraube (4), mittels derer die drei Teile zusammengehalten sind,
**dadurch gekennzeichnet, dass** zwischen dem Klemmenoberteil (2) und dem Klemmbügel (3) eine Feder (5) eingespannt ist, gegen deren Vorspannkraft der Klemmbügel (3) gegen das Klemmenoberteil (2) anziehbar ist.

2. Klemme nach Anspruch 1,
**dadurch gekennzeichnet, dass** die Feder (5) als Schraubendruckfeder ausgebildet ist, die sich mit ihren Enden an den einander gegenüberliegenden Flächen des Klemmbügels (3) und des Klemmenoberteils (2) abstützt.

3. Klemme nach Anspruch 1,
**dadurch gekennzeichnet, dass** die Feder (5) als Schraubendruckfeder ausgebildet und axial vom Schaft der Schraube (4) durchgriffen ist.

4. Klemme nach einem der Ansprüche 1 bis 3,
**dadurch gekennzeichnet, dass** die Schraube (4) einen Kopf mit einem Werkzeugansatz aufweist und mit ihrem Gewindeschaft in eine Gewindeausbildung des Klemmenunterteils (1) eingeschraubt ist, wobei der Kopf sich oberseitig des Klemmbügels (3) abstützt.

5. Klemme nach einem der Ansprüche 1 bis 3,
**dadurch gekennzeichnet, dass** die Schraube (4) als Schlossschraube ausgebildet ist, deren Kopf (6) sich an der Unterseite des Klemmenunterteils (1) abstützt, deren dem Kopf benachbarter Vierkant (7) eine Rechtecklochung (8) des Klemmenunterteils (1) durchgreift und auf deren Gewindeschaft eine Schraubenmutter (9) aufgeschraubt ist, die sich an der Oberseite des Klemmbügels (3) abstützt.

6. Klemme nach Anspruch 5,
**dadurch gekennzeichnet, dass** die Rechtecklochung (8) des Klemmenunterteils (1) in Querrichtung zum Längsverlauf des Klemmenunterteils (1) gesehen, dem Vierkant (7) eng angepasst ist und in Längsrichtung größer als die Abmessung des Vierkantes (7), vorzugsweise etwa doppelt so groß bemessen ist.

7. Klemme nach einem der Ansprüche 1 bis 6,
**dadurch gekennzeichnet, dass** das Klemmenoberteil (2), das Klemmenunterteil (1) und der Klemmbügel (3) aus Metallblech, insbesondere Stahl-, Aluminium- oder Kupferblech oder dergleichen Material, gestanzte und geformte Formstücke sind.

8. Klemme nach Anspruch 7,
**dadurch gekennzeichnet, dass** das Klemmenoberteil (2) und das Klemmenunterteil (1) über ihren Längsverlauf je zwei zueinander parallel gerichtete Versteifungssicken (10,11) aufweisen, wobei der Abstand zwischen den Sickenpaaren (10,11) mindestens gering größer ist als der Kopfdurchmesser des Kopfes (6) der Schraube (4) beziehungsweise als dem von den durch den Klemmbügel (3) gehaltenen Drähten überdeckten Flächenbereich entspricht.

9. Klemme nach einem der Ansprüche 1 bis 8,
**dadurch gekennzeichnet, dass** der Klemmbügel (3) aus einer flachen Blechplatte rechteckiger Form besteht, von deren Längsrandkanten Haltelaschen (12) für Drähte oder Drahtstäbe in Richtung zum Klemmenoberteil (2) hin abgebogen geformt sind und von deren Querrandkanten Abstandshaltelaschen (13) für parallel verlegte Drähte oder Drahtstäbe zum Klemmenoberteil (2) hin abgebogen geformt sind.

10. Klemme nach einem der Ansprüche 1 bis 9,
**dadurch gekennzeichnet, dass** die Länge der Schraube (4) so groß bemessen ist, dass bei in eine Vormontagelage verstellter Schraube (4) das Klemmenoberteil (2) relativ zum Klemmenunterteil (1) in eine Montagelage entgegen der Kraft der Feder (5) verstellbar ist.

11. Klemme nach einem der Ansprüche 1 bis 10,
**dadurch gekennzeichnet, dass** die Kraft der Feder (5) derart bemessen ist, dass bei in einer Vormontagelage befindlicher Schraube (4) eine Klemmung des ersten Gegenstandes zwischen Klemmenoberteil (2) und Klemmenunterteil (1) bewirkt ist.

## Claims

1. Clamp for attaching to a first object, in particular a roof gutter, and for fixing at least one second object, in particular a dimensionally stable wire as part of a lightning protection installation, consisting of a clamp lower part (1), a clamp upper part (2), a clip (3) which cooperates with the clamp upper part (2), and a bolt (4), by means of which the three parts are held together, **characterised in that** a spring (5) is inserted between the clamp upper part (2) and the clip (3), counter to the prestressing force of which the clip (3) can be tightened against the clamp upper part (2).

2. Clamp according to claim 1, **characterised in that** the spring (5) is designed as a helical compression spring which is supported by its ends against the surfaces of the clip (3) and of the clamp upper part (2) which are located opposite one another.

3. Clamp according to claim 1, **characterised in that** the spring (5) is designed as a helical compression spring and is passed through by the shaft of the bolt (4) in the axial direction.

4. Clamp according to one of claims 1 to 3, **characterised in that** the bolt (4) has a head with a tool engagement point and is screwed by its threaded shaft into a thread of the clamp lower part (1), the head being supported against the upper side of the clip (3).

5. Clamp according to one of claims 1 to 3, **characterised in that** the bolt (4) is designed as a carriage bolt, the head (6) of which is supported against the underside of the clamp lower part (1) and the square (7) of which passes through a rectangular hole (8) of the clamp lower part (2) and onto the threaded shaft of which there is screwed a nut (9) which is supported against the upper side of the clip (3).

6. Clamp according to claim 5, **characterised in that** the rectangular hole (8) of the clamp lower part (1), as seen in the transverse direction relative to the length profile of the clamp lower part (1), is tightly matched to the square (7) and in the longitudinal direction is larger than the size of the square (7), preferably approximately twice as large as the latter.

7. Clamp according to one of claims 1 to 6, **characterised in that** the clamp upper part (2), the clamp lower part (1) and the clip (3) are shaped pieces which have been punched and shaped from sheet metal, in particular steel, aluminium or copper sheet or other such material.

8. Clamp according to claim 7, **characterised in that** the clamp upper part (2) and the clamp lower part (1) have along their length in each case two stiffening beads (10, 11) aligned parallel to one another, wherein the distance between the pairs of beads (10, 11) is at least slightly larger than the head diameter of the head (6) of the bolt (4) and than the surface area covered by the wires held by the clip (3).

9. Clamp according to one of claims 1 to 8, **characterised in that** the clip (3) consists of a flat metal plate of rectangular shape, from the longitudinal boundary edges of which holding tabs (12) for wires or wire rods are shaped by bending in the direction of the clamp upper part (2), and from the transverse boundary edges of which spacer tabs (13) for wires or wire rods laid in parallel are shaped by bending in the direction of the clamp upper part (2).

10. Clamp according to one of claims 1 to 9, **characterised in that** the length of the bolt (4) is large enough that, with the bolt (4) placed in a preassembly position, the clamp upper part (2) can be moved into an assembly position relative to the clamp lower part (1) counter to the force of the spring (5).

11. Clamp according to one of claims 1 to 10, **characterised in that** the force of the spring (5) is such that, with the bolt (4) in a preassembly position, a clamping of the first object between the clamp upper part (2) and the clamp lower part (1) is achieved.

## Revendications

1. Pince à fixer sur un premier objet, en particulier sur une gouttière, et destinée à fixer au moins un deuxième objet, en particulier un fil métallique indéformable comme élément d'une installation de protection contre la foudre, constituée d'une partie inférieure de pince (1), d'une partie supérieure de pince (2), d'un étrier de serrage (3) coopérant avec la partie supérieure de pince (2), et d'une vis (4) au moyen de laquelle les trois éléments sont maintenus ensemble,
**caractérisée en ce qu'**un ressort (5) est monté entre la partie supérieure de pince (2) et l'étrier de serrage (3), l'étrier de serrage (3) pouvant être serré contre la partie supérieure de pince (2) à l'encontre de la force de précontrainte du ressort (5).

2. Pince selon la revendication 1, **caractérisée en ce que** le ressort (5) est réalisé sous la forme d'un ressort de pression à boudin, qui s'appuie par ses extrémités contre les faces en vis-à-vis de l'étrier de serrage (3) et de la partie supérieure de pince (2).

3. Pince selon la revendication 1, **caractérisée en ce que** le ressort (5) est réalisé sous la forme d'un ressort de pression à boudin et est traversé axialement par le corps de la vis (4).

4. Pince selon l'une des revendications 1 à 3, **caractérisée en ce que** la vis (4) présente une tête pourvue d'un embout pour outil et elle est vissée par son corps fileté dans une formation filetée de la partie inférieure de pince (1), sachant que la tête s'appuie contre le dessus de l'étrier de serrage (3).

5. Pince selon l'une des revendications 1 à 3, **caractérisée en ce que** la vis (4) est réalisée sous la forme d'une vis de verrouillage, dont la tête (6) s'appuie sur le dessous de la partie inférieure de pince (1), dont le quatre-pans (7) voisin de la tête traverse un perçage rectangulaire (8) de la partie inférieure de pince (1), et sur le corps fileté de laquelle est vissé un écrou de vis (9) qui s'appuie contre le dessus de l'étrier de serrage (3).

6. Pince selon la revendication 5, **caractérisée en ce que** le perçage rectangulaire (8) de la partie inférieure de pince (1) est, considéré en direction transversale par rapport à l'allure longitudinale de la partie inférieure de pince (1), étroitement adapté au quatre-pans (7), et est dimensionné en direction longitudinale plus grand que la dimension du quatre-pans (7), de préférence environ deux fois plus grand.

7. Pince selon l'une des revendications 1 à 6, **caractérisée en ce que** la partie supérieure de pince (2), la partie inférieure de pince (1) et l'étrier de serrage (3) sont des pièces façonnées, découpées et mises en forme, qui sont réalisées en tôle métallique, en particulier en tôle d'acier, d'aluminium ou de cuivre, ou matériau analogue.

8. Pince selon la revendication 7, **caractérisée en ce que** la partie supérieure de pince (2) et la partie inférieure de pince (1) présentent respectivement, sur leur étendue longitudinale, deux moulures de renforcement (10, 11) orientées en parallélisme mutuel, sachant que la distance entre les paires de moulures (10, 11) est au moins légèrement supérieure au diamètre de la tête (6) de la vis (4), ou encore à ce qui correspond à la région de surface qui est recouverte par les fils métalliques maintenus par l'étrier de serrage (3).

9. Pince selon l'une des revendications 1 à 8, **caractérisée en ce que** l'étrier de serrage (3) est constitué d'une plaque de tôle plate de forme rectangulaire, à partir des arêtes de bords longitudinaux de laquelle des pattes de maintien (12) pour des fils métalliques ou des tiges en fil métallique sont formées en étant recourbées en direction de la partie supérieure de pince (2), et à partir des arêtes de bords transversaux de laquelle des pattes de maintien d'écartement (13) pour des fils métalliques ou des tiges en fil métallique posées en parallèle sont formées en étant recourbées en direction de la partie supérieure de pince (2).

10. Pince selon l'une des revendications 1 à 9, **caractérisée en ce que** la longueur de la vis (4) est dimensionnée d'une taille telle que, la vis (4) étant déplacée dans une position de pré-montage, la partie supérieure de pince (2) peut être déplacée par rapport à la partie inférieure de pince (1) dans une position de montage à l'encontre de la force du ressort (5).

11. Pince selon l'une des revendications 1 à 10, **caractérisée en ce que** la force du ressort (5) est dimensionnée de telle sorte que, la vis (4) se trouvant dans une position de pré-montage, un serrage du premier objet entre la partie supérieure de pince (2) et la partie inférieure de pince (1) est produit.
